# EUROPEAN PATENT SPECIFICATION

(11) **EP 1 404 041 B1**
(45) Date of publication and mention of the grant of the patent: **18.11.2009**
(21) Application number: 02256678.0
(22) Date of filing: 25.09.2002
(51) Int. Cl.: H04B 17/00

(54) **Signal strength display device for wireless hub**
Signalstärkenanzeigevorrichtung für einen drahtlosen Knoten
Dispositif d'affichage du niveau du signal pour HUB sans fil

(43) Date of publication of application: 31.03.2004
(73) Proprietor: ZyXEL Communications Corporation, Hsin-Chu, Taiwan (TW)
(72) Inventor: Li, Jian-Huei, Hsin-Chu City, Taipei Hsien (TW); Lee, Chun-Yuan, Shi Chiu, Taichung City (TW)
(74) Representative: Viering, Jentschura & Partner

(56) References cited:
- EP-A- 1 102 426
- US-A- 4 890 332
- US-A- 5 390 365
- US-A- 6 035 183

## Description

### BACKGROUND OF THE INVENTION

### 1. Technical Field

The present invention is related to a wireless Hub according to the preamble of claim 1. More particularly the Hub is a wireless transmission Hub used in Local Area Network (LAN). The signal strength display device is disposed on a mother unit of the wireless Hub to display the strength of the wirelessly transmitted signals between the mother unit and daughter unit.

### 2. Description of the Prior Art

A wireless Hub of the initially-mentioned type is known, e.g., from EP-A-1 102 426.

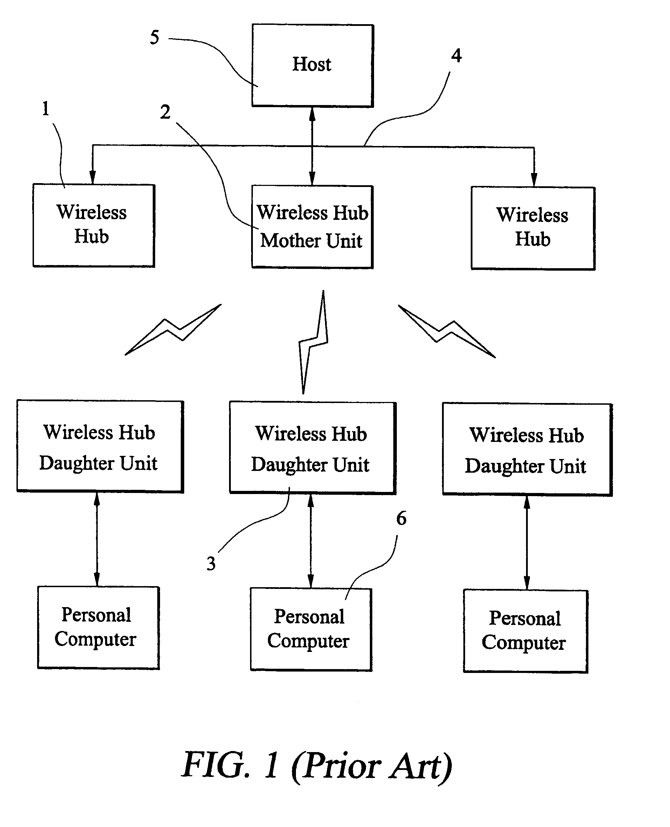

The conventional the Hub used in Local Area Network (LAN) can be divided into cable transmission Hub and wireless transmission Hub. With respect to the wireless Hub 1, a wireless mother unit (referred to as mother unit hereinafter) 2 cooperates with multiple wireless daughter units or wireless network interface cards (referred to as daughter units hereinafter) 3. Fig. 1 shows the signal transmission of a conventional wireless Hub. The mother unit 2 generally via a network cable 4 is connected to the Host 5 or the network server. The daughter units 3 are connected with desktop personal computers 6 or notebooks distributed all around. The mother unit 2 and daughter units 3 wirelessly transmit data to each other without using network line 4. This is quite convenient. However, in the case that there are a number of widely distributed daughter units 3, the mother unit 2 must be located in an optimal position to wirelessly connect with all the daughter units 3.

In general, the daughter units 3 are fixed in certain positions, while the mother unit 2 must be positioned in an optimal location to wirelessly connect with most of the daughter units 3 for data transmission. However, both the mother unit and daughter units of the existent wireless Hub cannot truly indicate the signal strength in a certain position. Accordingly, it is impossible to locate the best position where the mother unit 2 should be placed. Moreover, the place where the mother unit 2 is positioned will affect the speed and correctness of data transmission between the mother unit 2 and the daughter units 3. Therefore, a mother unit 2 is additionally disposed in the connection position of the wireless transmission of the mother unit 2 and daughter units 3 so as to ensure correct transmission of the data. This leads to waste of resource.

It is therefore tried by the applicant to develop a signal strength display device for wireless Hub. The display device is disposed on the mother unit to show the wireless transmission signal strength. In a state that most of the daughter units are connected, an optimal location of the mother unit can be quickly found.

### SUMMARY OF THE INVENTION

The present invention provides a wireless Hub according to claim 1.

Further embodiments of the invention are described in the dependent claims.

The present invention can be best understood through the following description and accompanying drawings wherein:

### BRIEF DESCRIPTION OF THE DRAWINGS

Fig. 1 is a block diagram showing signal transmission of a conventional wireless Hub;
Fig. 2 is a perspective view showing that the signal strength display device of the present invention is mounted on a mother unit;
Fig. 3 is a block circuit diagram of the signal strength display device of the present invention;
Fig. 4 is a block circuit diagram of the embodiment of the mother unit of the present invention; and
Fig. 5 is a block circuit diagram of the embodiment of the daughter unit of the present invention.

### DETAILED DESCRIPTION OF THE PREFERRED EMBODIMENTS

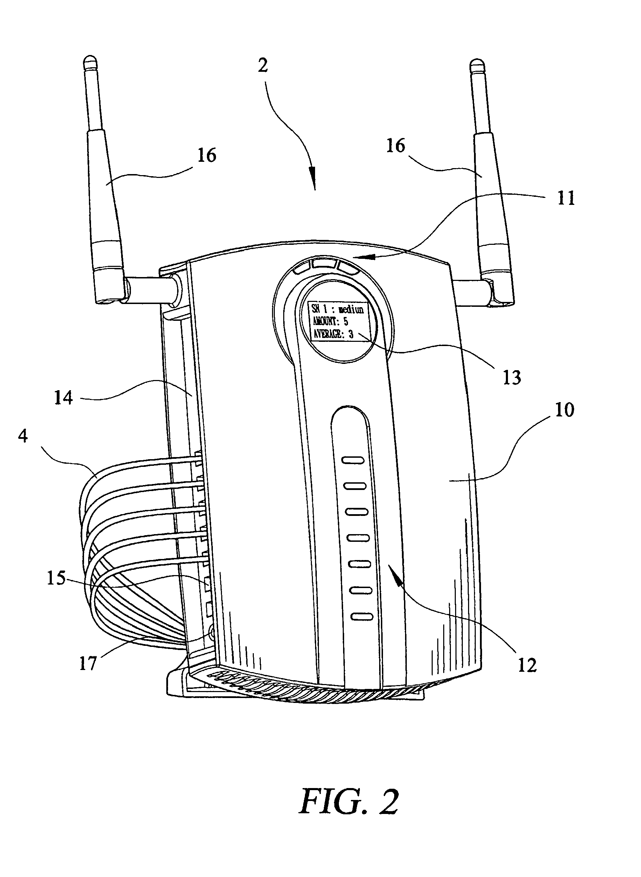

The present invention is related to a display device disposed on the mother unit of a wireless Hub for showing wireless transmission signal strength. Please first refer to Fig. 2 showing an embodiment of the present invention in which the signal strength display device is disposed on the mother unit 2. A power indicator lamp 11, multiple connection indicator lamps 12 and a signal strength display 13 are arranged on the front panel 10 of the housing of the wireless Hub of the mother unit 2. Multiple network cable 4 connecting jacks 15 are arranged on a side board 14 of the housing of the wireless Hub 1 for connecting with a Host 5 or personal computer 6 via said network cable 4. The connection indicator lamp 12 serves to indicate the connection state or transmission state of the connecting jack 15 of the wireless Hub 1. When said network cable 4 of the connecting jack 15 is successfully connected with the computer, the connection indicator lamp 12 will light. In the case of data transmission, the connection indicator lamp 12 will flicker.

Two antennas 16 are disposed on two sides of top end of the wireless Hub 1. The antennas 16 serve to receive or transmit radio signal for wirelessly connecting with the daughter unit 3 and transmitting data signals. A power input jack 17 is disposed on the side board 14 for inputting working power for the wireless Hub 1. When the power is input from the power input jack 17, the power indicator lamp 11 will light.

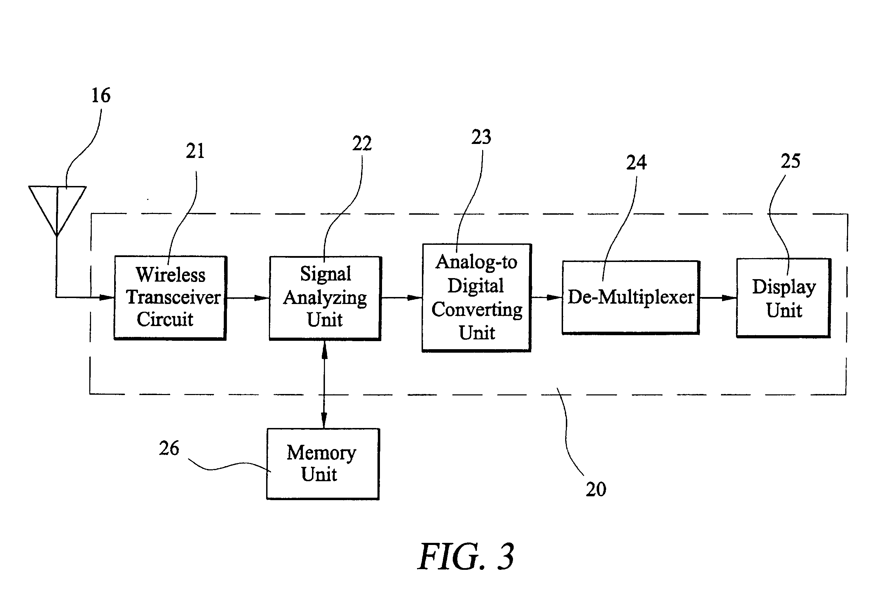

Please refer to Fig. 3 which shows a circuit block diagram of the display device of the present invention. The antennas 16 receive the radio signal transmitted from the daughter unit 3 and then the signal strength display 13 shows the value of the signal strength. It is known from the prior art that one mother unit 2 can cooperate with multiple daughter units 3. Therefore, the signal strength display 13 of the mother unit 2 can show the number of all the connected daughter units 3 and display the average value of the radio signal strength of all the connected daughter units 3 or the value of the radio signal strength between the mother unit 2 and one of the daughter units 3. Reversely, in the case that the signal strength display device 20 is disposed on the daughter unit 3, the signal strength display 13 only needs to display the value of the radio signal strength between the mother unit 2 and the daughter unit 3.

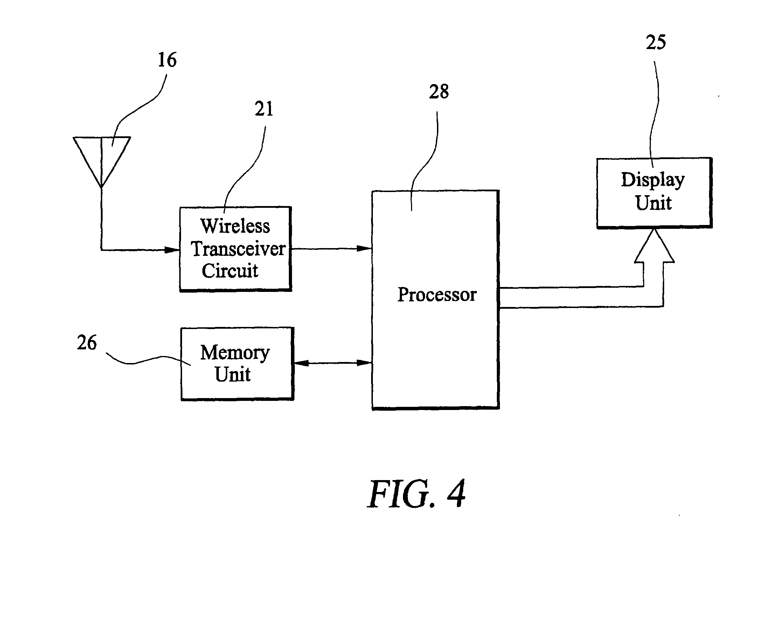

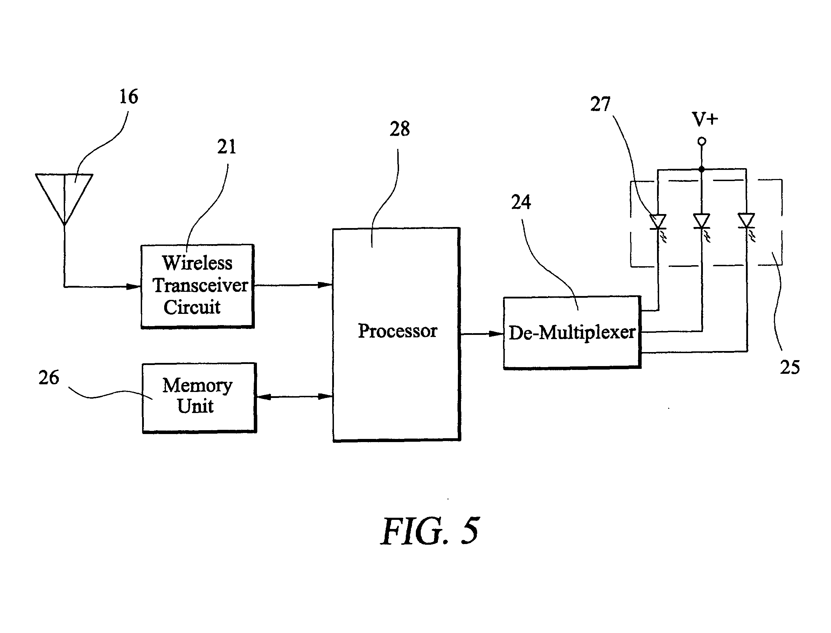

Please further also refer to Figs. 4 and 5 which are circuit block diagrams of the examples of mother unit and daughter unit of the present invention. The signal strength display device 20 of the present invention is mainly composed of a wireless transceiver circuit 21, a signal analyzing unit 22, an analog-to-digital converting unit 23, a de-multiplexer 24 and a display unit 25. Said wireless transceiver circuit 21 is connected to said antenna 16 which transmits or receives radio signal for wirelessly connecting with the daughter unit 3 or mother unit 2. Said wireless transceiver circuit 21 has at least one output terminal. With respect to the mother unit 2, said wireless transceiver circuit 21 will receive the radio signals sent from the daughter units 3 one by one. In order to distinguish the received signals sent from the daughter units 3, when the daughter units 3 transmit the radio signals, said wireless transceiver circuit 21 will add a specific code to the radio signal with respect to each daughter unit 3.

Said signal analyzing unit 22 is connected to the output terminal of said wireless transceiver circuit 21 for calculating and analyzing the strength of the radio signal received by said wireless transceiver circuit 21. Said signal analyzing unit 22 serves to amplify the radio signal and then calculate the peak value and average value of the radio signal so as to generate a corresponding value. For example, numerals 0~3 are used in correspondence to the grades of signal strength. With respect to the mother unit 2, said signal analyzing unit 22 respectively analyzes the strength of the radio signals sent from the daughter units 3 and generates corresponding values one by one and record or store the values. Therefore, the present invention further includes a memory unit 26 connected with said signal analyzing unit 22 for recording or storing the values generated by said signal analyzing unit 22 respectively corresponding to the signal strength of the daughter units 3.

Said analog-to-digital converting unit 23 has at least one input terminal connected with said signal analyzing unit 22 for converting the corresponding values generated by said signal analyzing unit 22 into digital data ( such as 2 bits digital data). Said analog-to-digital converting unit 23 has multiple output terminals connected to the de-multiplexer 24 which outputs the digital data to said display unit 25.

With respect to the daughter unit 3, said display unit 25 can be formed of multiple light emitting diodes 27. Said display unit 25 is mounted on the front panel 10 of the housing of the daughter unit 3 to form the signal strength display 13. In this example, three light emitting diodes 27 are exemplified. The output terminals of said de-multiplexer 24 are respectively connected to the three light emitting diodes 27 for driving the same to light. In the case that the daughter unit 3 fails to receive the radio signal sent from the mother unit 2, the light emitting diodes 27 will not emit light. If the radio signal is weakened, only one light emitting diode 27 will emit light. If the radio signal has medium strength, two light emitting diodes 27 will emit light. If the radio signal is strong, the three light emitting diodes 27 will emit light at the same time.

However, with respect to the mother unit 2, said display unit 25 must be able to display the number of all the connected daughter units 3 and display the average value of the radio signal strength of all the connected daughter units 3 or the value of the radio signal strength of one single daughter unit. Therefore, in this embodiment, a liquid crystal display or multiple seven-segment displays can be used as the signal strength display 13. When it is desired to display the number of all the connected daughter units 3, said signal analyzing unit 22 calculates the number of the values recorded or stored in said memory unit 26 and generates a corresponding value. Then the analog-to-digital converting unit 23 converts the corresponding value into digital data and directly outputs the digital data to said display unit 25 to display the digital data.

When it is desired to display the average value of the signal strength of all the connected daughter units 3, said signal analyzing unit 22 reads all the values recorded or stored in said memory unit 26 and calculates the average value thereof and then generates a corresponding value. Then said analog-to-digital converting unit 23 converts the corresponding value into digital data and directly outputs the digital data to the display unit 25 to display the digital data.

When it is desired to display the value of the signal strength of a certain connected daughter unit 3, said signal analyzing unit 22 reads the corresponding value of a specifically encoded daughter unit 3 recorded or stored in said memory unit 26. Then the analog-to-digital converting unit 23 converts the corresponding value into digital data and directly outputs the digital data to said display unit 25 to display the digital data.

The above procedures can be completed by a software program. Therefore, in the circuit diagram of the embodiment of the mother unit, a processor 28 can be used instead of said signal analyzing unit 22, said analog-to-digital converting unit 23 and the de-multiplexer 24 (as shown in Fig. 4). In addition, a software program executed in said processor 28 is used to simulate and generate the same output result. Said processor 28 can have one input terminal and multiple output terminals. Said input terminal is connected to the output terminal of the wireless transceiver circuit 21, while said multiple output terminals are connected to the display unit 25.

## Claims

1. A wireless hub comprising a mother unit (2) and daughter units (3), having a signal strength display device (13,20) comprising:
a wireless transceiver circuit (21) adapted for receiving or transmitting radio signals;
a signal analyzing unit (22) connected to an output terminal of said wireless transceiver circuit (21) and adapted for calculating and analyzing the strength of the radio signal received by said wireless transceiver circuit (21) to generate a corresponding value;
an analog-to-digital converting unit (23) having at least one input terminal connected with said signal analyzing unit (22) and adapted for converting the corresponding value generated by said signal analyzing unit (22) into digital data; and
a display unit (25) disposed on the wireless hub and adapted for displaying the digital data output by said analog-to-digital converting unit (23),
**characterized in that** said signal analyzing unit (22) is adapted to calculate the value of signal strength of each of the connected daughter units (3), the average value of the signal strength of all the connected daughter units (3) or the number of all the connected daughter units (3) and generate corresponding values, then said analog-to-digital converting unit (23) adapted for converting the corresponding values into digital data for the display unit (25) to display;
wherein the signal strength display device is disposed on said mother unit (2) and said wireless transceiver circuit (21) is adapted to receive the radio signals sent from the daughter units (3) one by one and add a specific code to the radio signal with respect to each daughter unit (3) so as to distinguish the received signals from each other.

2. The wireless hub as claimed in claim 1, further comprising at least one antenna (16) connected with said wireless transceiver circuit (21) for receiving and transmitting radio signals.

3. The wireless hub as claimed in claim 1, wherein said signal analyzing unit (22) is adapted to calculate the peak value and average value of the radio signal so as to generate a value corresponding to the grade of strength of the signal.

4. The wireless hub as claimed in claim 1, further comprising a memory unit (26) connected with said signal analyzing unit (22) for recording or storing the corresponding values generated by said signal analysing unit (22) .

5. The wireless hub as claimed in claim 1, wherein said display unit is a liquid crystal display or includes at least one seven-segment display.

6. The wireless hub as claimed in claim 1, further comprising a de-multiplexer (24) having at least one input terminal and multiple output terminals and connected between the analog-to-digital converting unit (23) and the display unit (25).

7. The wireless hub as claimed in claim 6, wherein said display unit includes multiple light emitting diodes, the output terminals of said de-multiplexer (24) being respectively connected to said light emitting diodes, whereby the number of the illuminated light emitting diodes indicates the strength of the signal.

## Patentansprüche

1. Drahtlos-Netzknoten, welcher eine Haupteinheit (2) und Nebeneinheiten (3) aufweist, mit einer Signalstärke-Anzeigeeinrichtung (13, 20), welche aufweist:
einen Drahtlos-Sender-Empfänger-Schaltkreis (21), der zum Empfangen oder Senden von Funksignalen eingerichtet ist;
eine Signal-Analysierungseinheit (22), die an einen Ausgangsanschluss des Drahtlos-Sender-Empfänger-Schaltkreises (21) angeschlossen ist und zum Berechnen und Analysieren der Stärke des Funksignals, das von dem Drahtlos-Sender-Empfänger-Schaltkreis (21) empfangen wird, eingerichtet ist, so dass ein entsprechender Wert erzeugt wird;
eine Analog-zu-Digital-Wandlereinheit (23) mit zumindest einem Eingangsanschluss, der mit der Signal-Analysierungseinheit (22) verbunden ist und zum Umwandeln des entsprechenden Werts, der von der Signalanalysierungs-Einheit (22) erzeugt wurde, in digitale Daten eingerichtet ist; und
eine Anzeigeeinheit (25), die auf dem Drahtlos-Netzknoten angeordnet ist und zum Anzeigen der digitalen Daten, die durch die Analog-zu-Digital-Wandlereinheit (23) ausgegeben werden, eingerichtet ist,
**dadurch gekennzeichnet, dass**
die Signal-Analysierungseinheit (22) zum Berechnen des Werts der Signalstärke von jedem der angeschlossenen Nebeneinheiten (3), des Durchschnittswert der Signalstärke von all den angeschlossenen Nebeneinheiten (3) oder der Anzahl von all den angeschlossenen Nebeneinheiten (3) und Erzeugen entsprechender Werte eingerichtet ist, außerdem die Analog-zu-Digital-Wandlereinheit (23) zum Umwandeln der entsprechenden Werte in digitale Daten für die Anzeigeeinheit (25), so dass die digitalen Daten angezeigt werden, eingerichtet ist;
wobei die Signalstärke-Anzeigeeinrichtung auf der Haupteinheit (2) angeordnet ist und der Drahtlos-Sender-Empfänger-Schaltkreis (21) zum Empfangen der Funksignale, die von den Nebeneinheiten (3) nacheinander gesendet werden, und Addieren eines speziellen Codes zu dem Funksignal bezüglich jeder Nebeneinheit (3), so dass die empfangenen Signale voneinander unterschieden werden, eingerichtet ist.

2. Drahtlos-Netzknoten gemäß Anspruch 1,
welcher ferner zumindest eine Antenne (16) aufweist, die mit dem Drahtlos-Sender-Empfänger-Schaltkreis (21) zum Empfangen und Senden von Funksignalen verbunden ist.

3. Drahtlos-Netzknoten gemäß Anspruch 1,
wobei die Signal-Analysierungseinheit (22) zum Berechnen des Spitzenwerts und des Durchschnittswerts des Funksignals eingerichtet ist, so dass ein Wert erzeugt wird, der dem Grad der Stärke des Signals entspricht.

4. Drahtlos-Netzknoten gemäß Anspruch 1,
welcher ferner eine Speichereinheit (26), die mit der Signal-Analysierungseinheit (22) verbunden ist, zum Aufnehmen oder Speichern der entsprechenden Werte, die von der Signal-Analysierungseinheit (22) erzeugt wurden, aufweist.

5. Drahtlos-Netzknoten gemäß Anspruch 1,
wobei die Anzeigeeinrichtung eine Flüssigkristall-Anzeige ist oder zumindest eine Sieben-Segment-Anzeige aufweist.

6. Drahtlos-Netzknoten gemäß Anspruch 1,
welcher ferner einen Demultiplexer (24) mit zumindest einem Eingangsanschluss und mehreren Ausgangsanschlüssen aufweist und zwischen die Analog-zu-Digital-Wandlereinheit (23) und die Anzeigeeinheit (25) geschaltet ist.

7. Drahtlos-Netzknoten gemäß Anspruch 6,
wobei die Anzeigeeinheit mehrere lichtemittierende Dioden aufweist, wobei die Ausgangsanschlüsse des Demultiplexers (24) jeweils an die lichtemittierenden Dioden angeschlossen sind, wodurch die Anzahl der beleuchteten lichtemittierenden Dioden die Stärke des Signals anzeigt.

## Revendications

1. Concentrateur sans fil comprenant une unité mère (2) et des unités filles (3), comportant un dispositif d'affichage d'intensité de signal (13, 20) comprenant:
un circuit d'émission-réception sans fil (21) adapté pour recevoir ou émettre des signaux radio ;
une unité d'analyse de signal (22) connectée à un terminal de sortie dudit circuit d'émission-réception sans fil (21) et adaptée pour calculer et analyser l'intensité du signal radio reçu par ledit circuit d'émission-réception sans fil (21) pour générer une valeur correspondante ;
une unité de conversion analogique-numérique (23) comportant au moins un terminal d'entrée connectée à ladite unité d'analyse de signal (22) et adaptée pour convertir la valeur correspondante générée par ladite unité d'analyse de signal (22) en des données numériques ; et
une unité d'affichage (25) disposée sur le concentrateur sans fil et adaptée pour afficher les données numériques délivrées par ladite unité de conversion analogique-numérique (23),
**caractérisé en ce que** ladite unité d'analyse de signal (22) est adaptée pour calculer la valeur de l'intensité du signal de chacune des unités filles (3) connectées, la valeur moyenne de l'intensité du signal de toutes les unités filles (3) connectées ou le nombre de toutes les unités filles (3) connectées et pour générer des valeurs correspondantes, ensuite ladite unité de conversion analogique-numérique (23) est adaptée pour convertir les valeurs correspondantes en des données numériques pour un affichage par l'unité d'affichage (25) ;
dans lequel le dispositif d'affichage d'intensité de signal est disposé sur ladite unité mère (2) et ledit circuit d'émission-réception sans fil (21) est adapté pour recevoir les signaux radio envoyés par les unités filles (3) un par un et pour ajouter un code spécifique au signal radio en relation avec chaque unité fille (3) de manière à distinguer les signaux reçus les uns des autres.

2. Concentrateur sans fil selon la revendication 1, comprenant en outre au moins une antenne (16) connectée audit circuit d'émission-réception sans fil (21) pour recevoir et émettre des signaux radio.

3. Concentrateur sans fil selon la revendication 1, **caractérisé en ce que** ladite unité d'analyse de signal (22) est adaptée pour calculer la valeur crête et la valeur moyenne du signal radio de manière à générer une valeur correspondant au niveau d'intensité du signal.

4. Concentrateur sans fil selon la revendication 1, comprenant en outre une unité de mémoire (26) connectée à ladite unité d'analyse de signal (22) pour enregistrer ou mémoriser les valeurs correspondantes générées par ladite unité d'analyse de signal (22).

5. Concentrateur sans fil selon la revendication 1, dans lequel ladite unité d'affichage est un afficheur à cristaux liquides ou comprend au moins un afficheur à sept segments.

6. Concentrateur sans fil selon la revendication 1, comprenant en outre un démultiplexeur (24) comportant au moins un terminal d'entrée et de multiples terminaux de sortie et connecté entre l'unité de conversion analogique-numérique (23) et l'unité d'affichage (25).

7. Concentrateur sans fil selon la revendication 6, dans lequel ladite unité d'affichage comprend de multiples diodes électroluminescentes, les terminaux de sortie dudit démultiplexeur (24) étant connectées respectivement auxdites diodes électroluminescentes, moyennant quoi le nombre de diodes électroluminescentes éclairées indique l'intensité du signal.
